# FASCICULE DE BREVET EUROPEEN

(11) **EP 1 954 512 B1**
(45) Date de publication et mention de la délivrance du brevet: **07.09.2011**
(21) Numéro de dépôt: 06831336.0
(22) Date de dépôt: 15.11.2006
(51) Int. Cl.: B60H 1/26, B60J 1/00

(54) **DISPOSITIF D'EXTRACTION D'AIR POUR VEHICULE DE LOCOMOTION OU SIMILAIRE**
LUFTABZUGSVORRICHTUNG FÜR EIN FAHRZEUG ZUR FORTBEWEGUNG O. Ä.
AIR EXTRACTING DEVICE FOR A VEHICLE FOR LOCOMOTION OR THE LIKE

(30) Priorité: 22.11.2005 FR 0553544
(43) Date de publication de la demande: 13.08.2008
(73) Titulaire: SAINT-GOBAIN GLASS FRANCE, 92400 Courbevoie (FR)
(72) Inventeur: DALMASSO, Giovanni, I-12100 Cuneo (IT); GERMANINO, Giuseppe, 10090 Castiglione Torinese Torino (IT)
(74) Mandataire: Colombier, Christian
(86) Numéro de dépôt international: PCT/FR2006/051174
(87) Numéro de publication internationale: WO 2007/060354

(56) Documents cités:
- DE-A1- 2 550 901
- DE-A1- 10 037 067
- DE-U1- 8 519 163
- FR-A- 2 848 916
- US-A- 2 470 799
- US-A- 3 405 968
- US-A- 5 797 791
- US-A- 5 897 435

## Description

La présente invention est relative à un dispositif d'extraction d'air pour véhicule de locomotion ou similaire.

Plus particulièrement, ce dispositif d'extraction d'air est adapté pour être associé à un substrat à fonction verrière tel que notamment un vitrage pour automobile ou similaire, du type particulièrement un vitrage latéral.

En effet, lorsqu'un vitrage latéral équipe un véhicule chargé de transporter des usagers (un minibus, un van), même lorsque celui-ci est équipé d'une climatisation, il y a un risque de condensation de l'humidité contenue dans l'air, de celle issue de la respiration des usagers. Cette buée se dépose sur les surfaces froides du véhicule et provoque un voile opaque qui limite la vision des usagers et notamment celle du conducteur. Généralement, au voisinage immédiat du pare-brise débouchent les bouches d'aération reliées au système de climatisation du véhicule qui provoquent un désembuage efficace.

Bien que dimensionner pour le volume de l'habitacle du véhicule, le dispositif de ventilation et/ou de climatisation voit son efficacité réduite lorsqu'il convient de désembuer des parois éloignées des bouches de sortie du dispositif de ventilation, au surplus si le véhicule transporte de nombreux passagers. Ce phénomène est encore amplifié lorsque le véhicule chemine dans un environnement chargé d'humidité, ou dans une atmosphère pluvieuse.

Il existe de nombreux dispositifs d'extraction d'air qui permettent de suppléer le dispositif de ventilation du véhicule dans des conditions difficiles de désembuage, comme décrit par exemple dans les documents DE-8519163U, DE-2550901 et US-3405968.

Selon une première famille, il peut s'agir de petites trappes, mettant en communication l'intérieur et l'extérieur du véhicule, par le biais de volet à incidence variable. Généralement ces dispositifs permettent de renouveler correctement l'air emprisonné dans le véhicule mais ils ne sont pas étanches à l'égard des projections d'eau (lavages par exemple), ou de pluies consécutives au déplacement du véhicule ; l'eau entrant dans l'habitacle par l'intermédiaire des volets.

Selon une deuxième famille, on connaît des dispositifs d'extraction d'air muni d'un ventilateur motorisé amplifiant le phénomène d'extraction naturelle. Outre le problème des risques d'infiltration d'eau encore présent, ce dispositif d'extraction nécessite l'amenée d'une source d'énergie pour faire fonctionner le moteur du ventilateur par des fils électriques ou par un bus-bar disgracieux.

La présente invention vise donc à pallier les inconvénients des dispositifs d'extraction connus de l'art antérieur en proposant un dispositif d'extraction d'air qui ne nécessite pas d'apport énergétique extérieur pour fonctionner et qui est étanche à toute projection d'eau.

A cet effet, le vitrage comportant au moins un substrat à fonction verrière comportant deux grandes faces d'une part, et un dispositif d'extraction d'air d'autre part, ledit dispositif étant muni d'au moins un orifice d'entrée d'air et d'au moins un orifice de sortie d'air, se caractérise en ce que les orifices d'entrée et de sortie d'air sont montés en aveugle et de part et d'autre d'un plan sensiblement parallèle aux dites grandes faces, et en ce que l'orifice d'entrée d'air comporte une pluralité de lamelles flexibles pouvant occuper une pluralité de positions entre une position ouverte dans laquelle ledit orifice d'entrée n'est pas obturé par lesdites lamelles et une position fermée dans laquelle ledit orifice d'entrée est obturé par les lamelles, les orifices d'entrée et de sortie d'air étant séparés par des chicanes.

Grâce à ce dispositif d'extraction, il est possible de ventiler suffisamment l'habitacle d'un véhicule de locomotion sans risque d'infiltration d'eau dans l'habitacle et sans raccordement à une alimentation externe, garantissant un fonctionnement optimal, même sous la pluie et sans nuire au design du véhicule.

Dans des modes de réalisation préférés de l'invention, on peut éventuellement avoir recours en outre à l'une et/ou à l'autre des dispositions suivantes :
- les orifices d'entrée et de sortie d'air sont séparés par des chicanes,
- les orifices d'entrée et de sortie sont disposés à une distance suffisante l'un de l'autre afin d'éviter des effets de couplage et pour maintenir des conditions aérauliques au niveau de l'orifice de sortie indépendantes des conditions aérauliques présentes au niveau de l'orifice d'entrée,
- la distance entre l'orifice d'entrée et l'orifice de sortie est d'au moins 5 cm et préférentiellement d'environ 10 cm ou plus,
- les orifices d'entrée et de sortie sont sensiblement positionnés selon des directions respectives perpendiculaires,
- le substrat est trempé,
- le dispositif d'extraction d'air qui est associé au substrat se situe à au moins 6 cm de l'un des bords du substrat.

Selon un autre aspect de l'invention, elle vise également un dispositif d'extraction d'air sensiblement parallélépipédique comportant au moins un moins un orifice d'entrée et au moins un orifice de sortie, caractérisé en ce que les orifices d'entrée et de sortie sont positionnés en aveugle l'un par rapport à l'autre et de part et d'autre d'un plan médian du parallêlépipède, en ce que les orifices d'éntrée (7) et de sortie d'air (19) sont séparés par des chiacanes (8), et en ce que l'orifice d'éntrée d'air (7) comporte une pluralité de lamelles flexibles pouvant occuper une pluralité de positions entre une position ouverte dans laquelle ledit orifice d'éntrée n'est pas obturé par lesdites lamelles (10) et une position fermée dans laquelle ledit orifice d'éntrée est obturé par les lamelles (10).

Selon encore un autre aspect de l'invention, celle-ci vise un panneau en verre trempé, équipé d'un dispositif d'extraction d'air tel que précédemment décrit, qui se caractérise en ce qu'il comporte un orifice recevant le dispositif d'extraction d'air, ledit orifice étant situé à au moins 5 cm d'un des bords du panneau.

Selon encore un autre aspect de l'invention, celle-ci vise l'utilisation du panneau précédent pour équiper un véhicule de locomotion du type automobile, train, navire, ou une enceinte destinée au transport d'individu, comme par exemple une cabine de téléphérique.

La présente invention sera mieux comprise à la lecture de la description détaillée ci-après d'exemples de réalisation non limitatifs illustrés à partir des figures.
- la figure 1 est une vue en perspective du dispositif d'extraction d'air objet de l'invention sans son couvercle,
- la figure 2 est une vue en perspective du dispositif d'obturation équipant le dispositif d'extraction d'air de la figure 1,
- la figure 3 est une vue en perspective du dispositif d'extraction d'air revêtu de son couvercle,
- la figure 4 est une vue en éclaté et en perspective du dispositif d'extraction d'air en cours de montage dans un substrat à fonction verrière.

Selon un mode préféré de réalisation du dispositif d'extraction d'air selon l'invention, celui ci comporte un premier réceptacle de forme parallélépipédique et sensiblement oblongue venu de fabrication par une technique de moulage, d'extrusion d'une matière plastique appartenant à la famille des polyoléfines, les polychlorures de vinyle, les polyacétates de vinyle, les styréniques.

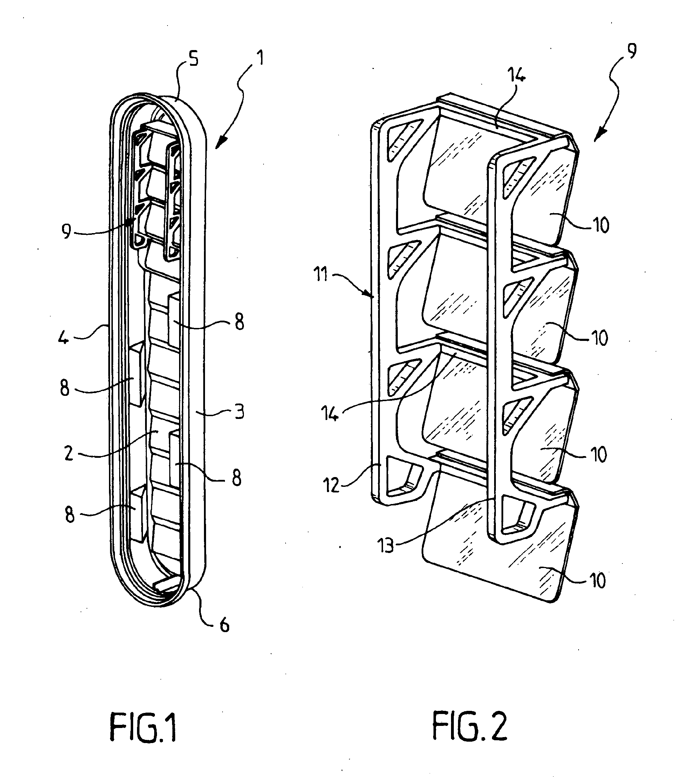

Comme on peut le voir sur la figure 1, ce réceptacle 1 ou boîte de forme oblongue comprend une paroi de fond 2 et 4 parois latérales formant 2 grands côtés 3, 4 et 2 petits côtés 5, 6, respectivement parallèles entre eux et se raccordant au niveau de leur extrémités libres par des parties en courbe.

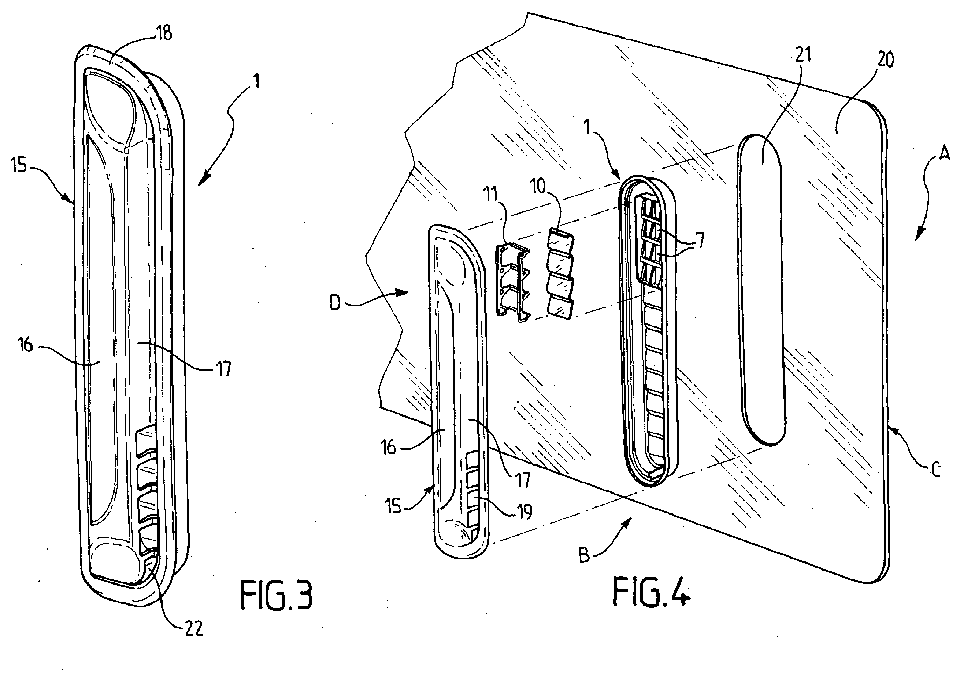

La paroi de fond 2 se subdivise en 2 parties distinctes :
- une première partie occupe sensiblement selon un premier tiers de la surface totale de la paroi de fond 2 et est pourvue d'une pluralité d'ouvertures 7 (visibles en figures 4) que l'on appellera aussi orifice d'entrée),
- une deuxième partie occupe sensiblement les deux tiers restant de la paroi de fond 2, ces deux parties sont contiguës et sont positionnées de telle façon que la première partie jouxte l'un des bords du dispositif d'extraction.

Afin de compartimenter les première et deuxième parties de la boîte, on prévoit de disposer à l'intérieur du volume de la boîte une pluralité de chicanes 8. Ces chicanes se présentent sous la forme de nervures venues de fabrication avec la boîte. Elles font saillie par rapport aux parois latérales du réceptacle et elles sont positionnées soit d'un seul côté, soit des deux côtés et dans ce cas, elles sont préférentiellement positionnées en quinconce.

Les ouvertures 7 pratiquées dans la paroi de fond 2 sont occultées par un dispositif d'occultation 9 (représenté en détail en figure 2) réalisé à partir d'un réseau de lamelles 10 flexibles ou similaires monté sur un châssis 11, ces lamelles pouvant occuper une pluralité de positions entre une position ouverte dans laquelle elles n'obstruent pas les ouvertures 7 et permettent un libre passage à un fluide situé de part et d'autre de la paroi de fond et une position fermée dans laquelle les lamelles 10 occultent d'une manière quasi étanche les ouvertures 7 empêchant tout passage d'un fluide au travers des ouvertures 7.

Ces lamelles 10 sont réalisées dans un matériau plastique de type de ceux cités précédemment et, plus particulièrement les matières plastiques qui possèdent des caractéristiques de souplesse et d'élasticité à température ambiante. A titre exemple, on pourra réaliser ces lamelles en PE (Polyéthylène) ou PP (polypropylène). Les lamelles 10 visibles en détail à la figure 2 forment chacune un polygone, et notamment sur la figure 2, un rectangle. L'un des grands côtés de la surface rectangulaire de chaque lamelle coopère au niveau d'un bras support constituant le châssis.

Comme on peut le voir également sur la figure 2, le châssis 11 est obtenu par une technique de moulage d'une matière plastique du type ABS ou similaire, éventuellement renforcée par des fibres ou des charges et s'étend sous la forme d'un squelette comprenant principalement deux tiges 12, 13 longitudinales reliées par une pluralité de tiges 14 transversales, chacune de ces tiges supportant une lamelle au niveau de l'un de ses côtés.

Le châssis 11 portant les lamelles 10 s'emboîtent dans le dispositif d'extraction d'air de telle façon que les lamelles 10 soient en regard des ouvertures 7 pratiquées sur la paroi de fond 2 du réceptacle 1, le châssis 11 étant maintenu en position par un système d'encliquetage ou de collage, soudage ou similaire.

Le réceptacle 1 et son dispositif d'obturation 9 à lamelles 10 sont recouverts par un couvercle 15 également en matière plastique, venu de fabrication par moulage ou par extrusion d'une matière plastique similaire à celle constituant le réceptacle. De profil identique à au réceptacle de manière à permettre son montage sur les parois latérales du réceptacle, et dans l'exemple non limitatif représenté au niveau des figures 3, 4 le couvercle 15 est de forme sensiblement oblongue.

Il présente en façade une paroi 16 inclinée dont le rôle sera explicité plus loin dans le texte, cette paroi 16 inclinée comporte sur l'un de ses grands côtés une paroi 17 en saillie et sensiblement perpendiculaire. La paroi 16 inclinée et la paroi perpendiculaire 17 délimitent entre-elles une surface convexe qui vient se raccorder au niveau d'un cordon périphérique 18 servant de surface de raccordement avec le réceptacle 1.

La paroi perpendiculaire 17 du couvercle est pourvue d'une pluralité d'ouvertures 19 (que l'on appellera aussi orifice d'entrée) permettant de mettre en communication le volume interne du dispositif d'extraction avec son environnement extérieur.

La figure 4 illustre le montage de ce dispositif d'extraction au sein d'un substrat 20, notamment à fonction verrière.

Dans cet exemple, il s'agit d'un substrat verrier pouvant être monté en tant que vitrage latérale dans un véhicule de transport (automobile, train, cabine de téléphérique, bateau, caravane...).

Ce substrat 20 est pourvu d'un orifice 21 dont le profil et les dimensions sont compatibles avec le montage du dispositif d'extraction. Il s'agit d'un orifice 21 oblong dont les contours périphériques sont distants d'au moins 6 cm du contour extérieur dudit substrat. En effet, ce substrat après réalisation de l'orifice subit un traitement thermique (trempe) afin d'améliorer ses propriétés de résistance mécanique et les inventeurs se sont aperçus qu'il convenait de respecter cette distance pour ne pas induire des risques de destruction du vitrage après trempe.

Le montage en éclaté de l'ensemble des pièces est le suivant :

Le réceptacle 1 est positionné au sein de l'orifice 21 pratiqué dans le substrat en prenant soin de positionner le réceptacle 1 d'une manière telle que les orifices 7 pratiqués dans la paroi de fond 2 se situent dans la partie supérieure du substrat 20. Le maintien en position du réceptacle au sein du vitrage est obtenu par tout moyen connu (collage, enclipsage, montage en force...).

Dans cette position de montage, les ouvertures pratiquées dans le dispositif d'extraction d'air sont en fait dirigées, lorsque le substrat sera monté dans la baie du véhicule de transport, vers l'intérieur du véhicule et sensiblement à une hauteur correspondant sensiblement à la tête de l'utilisateur lorsque ce dernier se trouve, par exemple assis dans le véhicule.

Au sens de l'invention on définit les repères suivants sur la figure 4.
A : représente l'intérieur du véhicule
B : représente l'extérieur du véhicule
C : représente la direction arrière du véhicule
D : représente la direction avant du véhicule.

On positionne alors le couvercle 15 sur la boîte 1 de telle manière que les ouvertures 19 pratiquées au sein de la paroi 17 perpendiculaire du couvercle 15 soient dirigées vers l'extérieur B du véhicule et vers son arrière C, et sensiblement en partie inférieure du substrat.

Comme on peut le voir sur la figure 4, la surface convexe du couvercle 15 forme une sorte de « coin » dont la partie inclinée est sensiblement positionnée dans le sens contraire à l'écoulement de l'air lorsque le véhicule muni de son vitrage dans lequel est monté le dispositif d'extraction d'air chemine dans une direction de C vers D.

Dans cette configuration, le couvercle 15 agit d'une manière similaire à une aile d'avion (la face inclinée 16 du couvercle 15 figure l'extrados et la paroi de fond 2 du réceptacle 1 figure l'intrados). Du fait de la circulation de l'air sur cette face inclinée 16, il se produit un phénomène de venturi au niveau des ouvertures 19 du couvercle 15 créant une aspiration de l'air située à l'intérieur A du véhicule. En raison de cette aspiration, les lamelles 10 se trouvent également aspirées, elles se soulèvent des ouvertures 7 réalisées dans la paroi de fond 2 du réceptacle 1 et l'air emmagasiné dans le véhicule est extrait vers l'extérieur B de ce dernier.

L'un des avantages de ce dispositif d'extraction d'air réside dans le fait qu'il est étanche à l'eau. Sa configuration empêche à toute eau résultant d'un lavage, d'une averse ou autres de rentrer à l'intérieur du véhicule.

Cet effet technique résulte de la combinaison de plusieurs caractéristiques techniques du dispositif d'extraction d'air objet de l'invention :
- le compartimentage du réceptacle par les nervures qui réalisent des chicanes sur le trajet de l'eau entre son orifice d'entrée au niveau des ouvertures du couvercle et son orifice de sortie au niveau des ouvertures réalisées sur la paroi de fond
- les lamelles qui obturent les ouvertures de la paroi de fond
- la position relative entre les orifices d'entrée et de sortie du dispositif d'extraction d'air. On note en effet que ceux ci sont positionnés en aveugle (ils ne sont pas en regard les uns des autres).
- Les orifices de sortie sont positionnés en partie inférieure du couvercle et un passage éventuel de l'eau au travers serait rapidement repris par un orifice 22 pratiqué en partie basse des ouvertures et serait ainsi évacué vers l'extérieur avant son entrée dans le réceptacle.
- La paroi inclinée du couvercle dépasse légèrement dans sa partie arrière au niveau de l'aplomb des ouvertures (les orifices d'entrée) du couvercle protégeant ainsi de toute entrée parasite de l'eau par ces orifices d'entrée
- les orifices d'entrée et de sortie sont disposés à une distance suffisante l'un de l'autre afin d'éviter des effets de couplage et de maintenir des conditions aérauliques au niveau de l'orifice de sortie indépendantes des conditions aérauliques présentes au niveau de l'orifice d'entrée.
- On prévoit que les orifices d'entrée et de sortie soient situés respectivement les uns des autres d'une distance d'au moins 5 cm, préférentiellement 10 cm, voire plus et selon des axes sensiblement perpendiculaires.

En variante non représenté sur les figures, on prévoit que le substrat soit légèrement bombé et dans ce cas, le réceptacle et son couvercle comporteront au niveau de leur zone de coopération avec le substrat un plan de jonction bombé du manière identique.

Selon encore une autre variante de réalisation, le dispositif d'extraction d'air n'est pas inséré au sein d'un orifice pratiqué au sein du substrat, mais en fait rapporté sur l'un des bords du substrat.

## Revendications

1. Vitrage comportant au moins un substrat (20) à fonction verrière comportant deux grandes faces (A, B) d'une part, et un dispositif (1) d'extraction d'air d'autre part, ledit dispositif (1) étant muni d'au moins un orifice d'entrée d'air (7) et d'au moins un orifice de sortie d'air (19), **caractérisé en ce que** les orifices d'entrée (7) et de sortie d'air (19) sont positionnés en aveugle et de part et d'autre d'un plan sensiblement parallèle aux dites grandes faces et **en ce que** l'orifice d'entrée d'air (7) comporte une pluralité de lamelles flexibles (10) pouvant occuper une pluralité de positions entre une position ouverte dans laquelle ledit orifice d'entrée (7) n'est pas obturé par lesdites lamelles et une position fermée dans laquelle ledit orifice d'entrée (7) est obturé par les lamelles, les orifices d'entrée (7) et de sortie d'air (19) étant séparés par des chicanes (8).

2. Vitrage selon l'une des revendications précédentes, **caractérisé en ce que** les orifices d'entrée (7) et de sortie (19) sont disposés à une distance suffisante l'un de l'autre afin d'éviter des effets de couplage et pour maintenir des conditions aérauliques au niveau de l'orifice de sortie (19) indépendantes des conditions aérauliques présentes au niveau de l'orifice d'entrée (7).

3. Vitrage selon la revendication précédente, **caractérisé en ce que** la distance entre l'orifice d'entrée (7) et l'orifice de sortie (19) est d'au moins 5 cm et préférentiellement d'environ 10 cm ou plus.

4. Vitrage selon l'une quelconque des revendications précédentes, **caractérisé en ce que** les orifices d'entrée (7) et de sortie (19) sont sensiblement positionnés selon des directions respectives perpendiculaires.

5. Vitrage selon l'une quelconque des revendications précédentes, **caractérisé en ce que** le substrat (20) est trempé.

6. Vitrage selon l'une quelconque des revendications précédentes, **caractérisé en ce que** le dispositif d'extraction d'air qui est associé au substrat (20) se situe à au moins 6 cm de l'un des bords du substrat.

7. Dispositif (1) d'extraction d'air sensiblement parallélépipédique comportant au moins un moins un orifice d'entrée (7) et au moins un orifice de sortie (19), **caractérisé en ce que** les orifices d'entrée (7) et de sortie (19) sont positionnés en aveugle l'un par rapport à l'autre et de part et d'autre d'un plan médian du parallélépipède, **en ce que** les orifices d'entrée (7) et de sortie d'air (19) sont séparés par des chicanes (8), et **en ce que** l'orifice d'entrée d'air (7) comporte une pluralité de lamelles (10) flexibles pouvant occuper une pluralité de positions entre une position ouverte dans laquelle ledit orifice d'entrée n'est pas obturé par lesdites lamelles (10) et une position fermée dans laquelle ledit orifice d'entrée est obturé par les lamelles (10).

8. Dispositif (1) d'extraction selon la revendication 7, **caractérisé en ce que** les orifices d'entrée (7) et de sortie (19) sont disposés à une distance suffisante l'un de l'autre afin d'éviter des effets de couplage et de maintenir des conditions aérauliques au niveau de l'orifice de sortie (19) indépendantes des conditions aérauliques présentes au niveau de l'orifice d'entrée (7).

9. Dispositif (1) d'extraction selon l'une quelconque des revendications 7 à 8, **caractérisé en ce que** la distance entre l'orifice d'entrée (7) et l'orifice de sortie (19) est d'au moins 5 cm et préférentiellement d'environ 10 cm ou plus.

10. Dispositif (1) d'extraction selon l'une quelconque des revendications 7 à 9, **caractérisé en ce que** les orifices d'entrée (7) et de sortie (19) sont sensiblement positionnés selon des directions respectives perpendiculaires.

11. Panneau en verre trempé, équipé d'un dispositif (1) d'extraction d'air selon l'une quelconque des revendications 7 à 10, **caractérisé en ce que** ledit panneau comporte un orifice (21) recevant le dispositif (1) d'extraction d'air, ledit orifice (21) étant situé à au moins 5 cm d'un des bords du panneau.

12. Utilisation d'un vitrage selon l'une quelconque des revendications 1 à 6, pour équiper un véhicule de locomotion du type automobile, train, navire, ou une enceinte destinée au transport d'individu, comme par exemple une cabine de téléphérique.

13. Utilisation d'un vitrage selon la revendication 12, **caractérisé en ce que** le dispositif d'extraction (1) équipant ledit vitrage est positionné sensiblement à une hauteur correspondant à la tête de l'individu situé dans ladite enceinte.

14. Utilisation d'un vitrage selon la revendication 12, **caractérisé en ce que** le dispositif d'extraction (1) est positionné verticalement, l'orifice d'entrée (7) en partie supérieure, l'orifice de sortie (19) en partie inférieure.

15. Utilisation d'un vitrage selon la revendication 14, **caractérisé en ce que** l'orifice de sortie (19) comporte un orifice d'évacuation (22) situé en partie la plus basse dudit orifice de sortie (19).

## Claims

1. Window comprising at least one see-through substrate (20) comprising two major faces (A, B) on the one hand, and an air extraction device (1) on the other hand, said device (1) being provided with at least one air inlet orifice (7) and at least one air outlet orifice (19), **characterized in that** the air inlet (7) and outlet (19) orifices are blind positioned on either side of a plane substantially parallel to said major faces, and **in that** the air inlet orifice (7) comprises a plurality of flexible slats (10) which may adopt a plurality of positions between an open position in which said inlet orifice (7) is not closed off by said slats and a closed position in which said inlet orifice (7) is closed off by the slats, the air inlet (7) and outlet (19) orifices being separated by baffles (8).

2. Window according to one of the preceding claims, **characterized in that** the inlet (7) and outlet (19) orifices are arranged at a sufficient distance from one another to prevent coupling effects and to maintain air flow conditions at the level of the outlet orifice (19) independent of the air flow conditions present at the level of the inlet orifice (7).

3. Window according to the preceding claim, **characterized in that** the distance between the inlet orifice (7) and the outlet orifice (19) is at least 5 cm and preferably approximately 10 cm or more.

4. Window according to any one of the preceding claims, **characterized in that** the inlet (7) and outlet (19) orifices are substantially positioned in respectively perpendicular directions.

5. Window according to any one of the preceding claims, **characterized in that** the substrate (20) is toughened.

6. Window according to any one of the preceding claims, **characterized in that** the air extraction device which is associated with the substrate (20) is situated at least 6 cm from one of the edges of the substrate.

7. Substantially parallelepipedal air extraction device (1) comprising at least one inlet orifice (7) and at least one outlet orifice (19), **characterized in that** the inlet (7) and outlet (19) orifices are positioned blind relative to one another and either side of a median plane of the parallelepiped, **in that** the air inlet (7) and outlet (19) orifices are separated by baffles (8), and **in that** the air inlet orifice (7) comprises a plurality of flexible slats (10) which may adopt a plurality of positions between an open position in which said inlet orifice is not closed off by said slats (10) and a closed position in which said inlet orifice is closed off by the slats (10).

8. Extraction device (1) according to Claim 7, **characterized in that** the inlet (7) and outlet (19) orifices are arranged at a sufficient distance from one another to prevent coupling effects and to maintain air flow conditions at the level of the outlet orifice (19) independent of the air flow conditions present at the level of the inlet orifice (7).

9. Extraction device (1) according to either one of Claims 7 and 8, **characterized in that** the distance between the inlet orifice (7) and the outlet orifice (19) is at least 5 cm and preferably approximately 10 cm or more.

10. Extraction device (1) according to any one of Claims 7 and 9, **characterized in that** the inlet (7) and outlet (19) orifices are substantially positioned in respectively perpendicular directions.

11. Panel of toughened glass, equipped with an air extraction device (1) according to any one of Claims 7 to 10, **characterized in that** said panel comprises an orifice (21) receiving the air extraction device (1), said orifice (21) being situated at least 5 cm from one of the edges of the panel.

12. Use of a window according to any one of Claims 1 to 6, in a transport vehicle of the motor vehicle, train or ship type, or an enclosure intended for individual transport, such as for example a cable car.

13. Use of a window according to Claim 12, **characterized in that** the extraction device (1) with which said window is fitted is positioned substantially at a height corresponding to the head of the individual situated in said enclosure.

14. Use of a window according to Claim 12, **characterized in that** the extraction device (1) is positioned vertically, with the inlet orifice (7) at the top and the outlet orifice (19) at the bottom.

15. Use of a window according to Claim 14, **characterized in that** the outlet orifice (19) comprises a discharge orifice (22) situated at the very bottom of said outlet orifice (19).

## Patentansprüche

1. Scheibe mit wenigstens einem Substrat (20) mit Verglasungsfunktion, das zwei große Flächen (A, B) einerseits und eine Luftabzugsvorrichtung (1) andererseits umfasst, wobei die Vorrichtung (1) mit wenigstens einer Lufteintrittsöffnung (7) und mit wenigstens einer Luftaustrittsöffnung (19) versehen ist, **dadurch gekennzeichnet, dass** die Lufteintrittsöffnung (7) und die Luftaustrittsöffnung (19) blind und auf beiden Seiten einer zu den großen Flächen im Wesentlichen parallelen Ebene angeordnet sind und dass die Lufteintrittsöffnung (7) eine Vielzahl von flexiblen Lamellen (10) umfasst, die eine Vielzahl von Positionen zwischen einer geöffneten Stellung, in der die Eintrittsöffnung (7) nicht durch die Lamellen verschlossen ist, und einer geschlossenen Stellung, in der die Eintrittsöffnung (7) durch die Lamellen verschlossen ist, einnehmen können, wobei die Lufteintrittsöffnung (7) und die Luftaustrittsöffnung (19) durch Hindernisse (8) getrennt sind.

2. Scheibe nach einem der vorstehenden Ansprüche, **dadurch gekennzeichnet, dass** die Eintrittsöffnung (7) und die Austrittsöffnung (19) in einem ausreichenden Abstand voneinander angeordnet sind, um Kopplungseffekte zu vermeiden und um im Bereich der Austrittsöffnung (19) lufttechnische Bedingungen aufrecht zu erhalten, die von den im Bereich der Eintrittsöffnung (7) vorliegenden lufttechnischen Bedingungen unabhängig sind.

3. Scheibe nach dem vorstehenden Anspruch, **dadurch gekennzeichnet, dass** der Abstand zwischen der Eintrittsöffnung (7) und der Austrittsöffnung (19) wenigstens 5 cm und vorzugsweise etwa 10 cm oder mehr beträgt.

4. Scheibe nach einem der vorstehenden Ansprüche, **dadurch gekennzeichnet, dass** die Eintrittsöffnung (7) und die Austrittsöffnung (19) im Wesentlichen in jeweiligen senkrechten Richtungen angeordnet sind.

5. Scheibe nach einem der vorstehenden Ansprüche, **dadurch gekennzeichnet, dass** das Substrat (20) gehärtet ist.

6. Scheibe nach einem der vorstehenden Ansprüche, **dadurch gekennzeichnet, dass** die Luftabzugsvorrichtung, die dem Substrat (20) zugeordnet ist, wenigstens 6 cm von einer der Kanten des Substrats gelegen ist.

7. Luftabzugsvorrichtung (1), die im Wesentlichen quaderförmig ist, umfassend wenigstens eine Eintrittsöffnung (7) und wenigstens eine Austrittsöffnung (19), **dadurch gekennzeichnet, dass** die Eintrittsöffnung (7) und die Austrittsöffnung (19) blind zueinander sowie auf beiden Seiten einer Mittelebene des Quaders angeordnet sind, dass die Lufteintrittsöffnung (7) und die Luftaustrittsöffnung (19) durch Hindernisse (8) getrennt sind und dass die Lufteintrittsöffnung (7) eine Vielzahl von flexiblen Lamellen (10) umfasst, die eine Vielzahl von Positionen zwischen einer geöffneten Stellung, in der die Eintrittsöffnung nicht durch die Lamellen (10) verschlossen ist, und einer geschlossenen Stellung, in der die Eintrittsöffnung durch die Lamellen (10) verschlossen ist, einnehmen können.

8. Abzugsvorrichtung nach Anspruch 7, **dadurch gekennzeichnet, dass** die Eintrittsöffnung (7) und die Austrittsöffnung (19) in einem ausreichenden Abstand voneinander angeordnet sind, um Kopplungseffekte zu vermeiden und um im Bereich der Austrittsöffnung (19) lufttechnische Bedingungen aufrecht zu erhalten, die von den im Bereich der Eintrittsöffnung (7) vorliegenden lufttechnischen Bedingungen unabhängig sind.

9. Abzugsvorrichtung (1) nach einem der Ansprüche 7 bis 8, **dadurch gekennzeichnet, dass** der Abstand zwischen der Eintrittsöffnung (7) und der Austrittsöffnung (19) wenigstens 5 cm und vorzugsweise etwa 10 cm oder mehr beträgt.

10. Abzugsvorrichtung (1) nach einem der Ansprüche 7 bis 9, **dadurch gekennzeichnet, dass** die Eintrittsöffnung (7) und die Austrittsöffnung (19) im Wesentlichen in jeweiligen senkrechten Richtungen angeordnet sind.

11. Platte aus gehärtetem Glas, die mit einer Luftabzugsvorrichtung (1) nach einem der Ansprüche 7 bis 10 ausgestattet ist, **dadurch gekennzeichnet, dass** die Platte eine Öffnung (21) aufweist, welche die Luftabzugsvorrichtung (1) aufnimmt, wobei die Öffnung (21) wenigstens 5 cm von einer der Kanten der Platte gelegen ist.

12. Verwendung einer Scheibe nach einem der Ansprüche 1 bis 6, um ein Fahrzeug zur Fortbewegung vom Typ Kraftfahrzeug, Zug, Schiff, oder einen Raum, der für die Personenbeförderung bestimmt ist, wie zum Beispiel eine Seilbahnkabine, auszustatten.

13. Verwendung einer Scheibe nach Anspruch 12, **dadurch gekennzeichnet, dass** die Abzugsvorrichtung (1), mit der die Scheibe ausgestattet ist, im Wesentlichen in einer Höhe angeordnet ist, die dem Kopf der in dem Raum befindlichen Person entspricht.

14. Verwendung einer Scheibe nach Anspruch 12, **dadurch gekennzeichnet, dass** die Abzugsvorrichtung (1) vertikal, die Eintrittsöffnung (7) im oberen Teil, die Austrittsöffnung (19) im unteren Teil angeordnet ist.

15. Verwendung einer Scheibe nach Anspruch 14, dadurch gekenntzeichnet, dass die Austrittsöffnung (19) eine Abzugsöffnung (22) umfasst, die im untersten Teil der Austrittsöffnung (19) gelegen ist.
